# EUROPEAN PATENT SPECIFICATION

(11) **EP 3 454 201 B1**
(45) Date of publication and mention of the grant of the patent: **01.04.2020**
(21) Application number: 18190773.4
(22) Date of filing: 24.08.2018
(51) Int. Cl.: G06F 3/12

(54) **A POWER MANAGEMENT ARBITER SYSTEM FOR A PRINT FLEET AND A METHOD OF USING SAID SYSTEM**
LEISTUNGSVERWALTUNGSVERMITTLERSYSTEM FÜR EINE DRUCKFLOTTE UND VERFAHREN ZUR VERWENDUNG DES BESAGTEN SYSTEMS
SYSTÈME D'ARBITRAGE DE GESTION DE PUISSANCE POUR UN PARC D'IMPRESSION ET PROCÉDÉ D'UTILISATION DUDIT SYSTÈME

(30) Priority: 07.09.2017 EP 17189848
(43) Date of publication of application: 13.03.2019
(73) Proprietor: Canon Production Printing Holding B.V., 5914 CA Venlo (NL)
(72) Inventor: Kruizinga, Peter, 5914 CA Venlo (NL); Kessels, Gerardus G.J.C., 5914 CA Venlo (NL); Thijssen, Abraham, 5914 CA Venlo (NL)
(74) Representative: Canon Production Printing IP Department

(56) References cited:
- US-A1- 2009 021 766
- US-A1- 2010 128 301
- US-A1- 2011 016 342
- US-A1- 2016 098 234

## Description

### Field of the invention

The invention relates to a power management arbiter system for managing a power up of a print fleet system, the print fleet system comprising a plurality of printers, each printer of the plurality of printers comprising a plurality of functional modules like a print engine and a heater, a power controller, a communication interface with the power management arbiter system, the power management arbiter system being configured to determine which functional modules are allowed to power up, and, if allowed, at which point in time.

### Background of the invention

High production printers require much power during a warming up phase of the printer, resulting in a peak demand for electric current. Especially, a print engine and a heater residing in the printer require much power during warming up. For this purpose a high current power line connection is needed. A customer will be charged by the energy provider according to an operational peak value of the electric current. To reduce operating costs the peak current should be kept as low as possible.
In case a customer has a print fleet system comprising a plurality of printers, this situation could even get worse. When multiple printers are powered on at the same time, electric power requirements are adding up and may even exceed a maximum rated current. To keep a peak electric current as low as possible and to prevent a blown fuse, the printers should not be switched on simultaneously.

In order to limit energy operating costs and to prevent a blown fuse, the printers in the print fleet system need to be switched on in such a way that a totally demanded current is within the maximum rated current and with the peak demand as low as possible, while at the same time all printers should be operational at the start of a production day.

Nowadays automatic power/on timers are provided for turning on the printer. By selecting a fixed warming up time, the timers on multiple printers may be set in such a way that the printers power on in a current-safe sequence without bursts and blown fuses. However, the warming up time is not fixed and is effected by actual physical parameters inside the printers and in the environment of the printers like temperature and humidity as well as by printer-specific variances like heater degradation. Therefore, to be on a safe side, and ready in time, the printers are turned on in a sequence with a non-overlapping start-up schedule, while a length of the warming-up time is based on a worst case scenario. This results in a sub-optimal power-on behaviour.
US 2009/021766 A1 discloses a print system that has a plurality of printer units for print processing on a print medium basis and that ejects printed materials, printed by the plurality of printer units, according to a pre-set order. Each printer unit includes peak current calculation means that analyzes a load of received print data, calculates a peak current value that will be required for printing the print data based on the load analysis, and sends the calculated peak current value, as well as a print request, to a controller. The controller compares a total current value of the peak current value, which is sent from the peak current calculation means, and a total current consumption value of printer units in print operation with a maximum current setting value stored in the print system and, based on the comparison result, controls whether or not the print request from the printer unit is permitted.
US 2016/098234 A1 discloses a method and system for remote servicing of an industrial printer includes obtaining, on a processor, sensor data that indicates values output by a sensors configured to measure physical phenomena related to a plurality of components of the industrial printer. Also obtained, on the processor, is parameter data that indicates values for parameters that indicate user settings for operation of the industrial printer. It is determined, on the processor, a service issue related to the industrial printer based on the sensor data and the parameter data, It is also determined, at least in part on the processor, an action to be performed on the industrial printer in response to the service issue. Furthermore; the action is caused to be initiated. In some embodiments, the action is initiated at one facility different from a facility where the industrial printer is located.
It is an object of the invention to provide a power management arbiter system and a method therefore that supports a safe, cost-effective, efficient and time-saving power up of the print fleet system.

The invention is set out in the appended set of claims. The dependent claims set out particular embodiments. The embodiments or examples of the following description which are not covered by the appended claims are merely for illustrative purposes.

### Summary of the invention

For this purpose, the determination of which functional modules are allowed to power up, and, if allowed, at which point in time, takes into account historical data and actual physical data stored in the printers of the print fleet system or stored in storage of the power management arbiter system or provided by a web service system, the historical data comprising timings of an electric current used during previous power ups of the functional modules of printers in the print fleet system and physical data measured during previous power ups of the functional modules of printers in the print fleet system.

With the power management arbiter system according to the invention, an algorithm to determine an optimal power-on sequence uses historical power-on sequence duration measurements per functional module of a printer of the print fleet system together with other relevant historical data stored in the printers of the print fleet system or stored in storage of the power management arbiter system or provided by web services in a digital network. The historical data also comprises values of physical parameters measured during previous power ups of the functional modules of printers in the print fleet system. The historical data is combined with actual data collected inside the printers, locally in an environment of the print fleet system, and from web-services to predict an actual required power-on duration. For the prediction, several well-known prediction methods may be used which will be elucidated later on.

Optimization criteria for the power-up of the print fleet system may comprise a lowest possible peak in power consumption and a lowest overall power consumption until production start. The historic data (collected from a specific printer or from the worldwide population of the same printer types) is used to learn the start-up behaviour of a specific printer, in a particular context.

Once a power-on command has been given, the progress of the power-on is continuously monitored and used to determine when the next printer or even a next functional module in a printer in the print fleet system is allowed to power-on. Monitoring the power-on of a printer in the print fleet system is done by the central power management arbiter component as well as directly by the printer that needs to be powered up. By doing so, there is a fine-grained control over the power of a printer's functional modules to optimize electric current distribution over multiple printers in the print fleet system. The power management arbiter component takes the current power-up status or progress of the other printers than a particular printer in the print fleet system into account. A control of a power circuit of functional modules of a printer may be exposed to a remotely accessible application programmable interface (API) residing in the power management arbiter component. Monitoring of progress of power up of functional modules of a printer may also be exposed to the same API.

The invention may be extended with a mechanism to power-off printers remotely, for example based on a production schedule of a print shift. Such a mechanism may be used to save energy as early as production allows.

According to an embodiment the determination of which functional modules are allowed to power up, and, if allowed, at which point in time, takes into account printer-specific variances of the functional modules in the printers in the print fleet system. A functional module may be for example a heater exposed to heater degradation or a conditioned input or output holder.

According to an embodiment the determination of which functional modules are allowed to power up, and, if allowed, at which point in time, takes into account an actual physical parameter like temperature or humidity inside the functional modules of the printers of the print fleet system.

According to an embodiment at least one printer of the plurality of printers comprises a heater, and the determination of which functional modules are allowed to power up, and, if allowed, at which point in time, takes into account a temperature of the heater.

According to an embodiment each printer of the plurality of printers comprises a print job queue for print jobs submitted to the printer for printing, each print job having print job specifications, the print job queue being readable by the print controller which is configured to determine power up conditions for each print job based on the print job specifications and to transfer the power up conditions of each print job to the power management arbiter system.

According to an embodiment the determination of which functional modules are allowed to power up, and, if allowed, at which point in time, takes into account actual physical parameters of an environment of the print fleet system.

According to an embodiment the printers in the print fleet system comprise sensors, via which sensors values of the actual physical parameters are gathered.

According to an embodiment the power management arbiter system is connected to a digital network, via which digital values of the actual physical parameters and information from other printers of the print fleet system are gathered.

The invention also relates to a method of managing a power up of a print fleet system comprising a plurality of printers and connected to a power management arbiter system, wherein the method comprises the steps of:
a) reading from storage of the power management arbiter system or from storages of the printers of the print fleet system or provided by a web service system, historical data comprising timings of current used during previous power ups of functional modules of the printers of the print fleet system and physical data measured during previous power ups of the functional modules of printers in the print fleet system, and actual physical data of the print fleet system and an environment of the print fleet system,
b) the power management arbiter system determining which functional modules are allowed to power up, and, if allowed, at which point in time,
c) powering up the functional modules of the printers of the print fleet according to the determination in the determining step b),
wherein the determining step b) takes into account the historical data and the actual physical data read in step a).

According to an embodiment of the method a power up of a functional module of a printer of the print fleet system comprises phases of different power consumption, and the method comprises the step of overlapping a power up of two functional modules of printers of the print fleet system in time for at least one phase per functional module when a summarized power consumption over the printers of the print fleet during said at least one phase is below a maximum allowed power consumption. The overlap may be between functional modules in one printer of the print fleet system, but may also be between functional modules in different printers in the print fleet system.

According to an embodiment the method comprises the steps of monitoring a progress of the power up of a functional module of one printer in the print fleet system by another printer in the print fleet system, and powering up the other printer if the start of the powering up of the other printer is allowed according to the progress of the power up of the functional module of the one printer.

According to an embodiment the method comprises the step of determining a time of start of the power up of the print fleet system taking into account a predetermined ready time of each printer in the print fleet system.

According to an embodiment the method comprises the step of optimizing an earliest ready time of each printer in the print fleet system taking into account a predetermined time of start of the power up of the print fleet system.

The invention also relates to a non-transitory recording medium comprising computer executable program code configured to instruct at least one computer to perform the method according to the invention.

### Brief description of the drawings

The invention will now be explained further with reference to the drawings indicated below.
Fig. 1 shows the general arrangement of a print fleet system together with a power management arbiter system according to the invention.
Fig. 2 - 3 show sequence diagrams of a power up of a print fleet system according to the invention.
Fig. 4 shows a schematic overview of a power consumption over time when a printer is powered up.
Fig. 5 shows a schematic overview of a power consumption over time during a power-up of two printers according to the invention.
Fig. 6 shows a flow diagram of the method according to the invention.

### Detailed description of the embodiments

The present invention will now be described with reference to the accompanying drawings, wherein the same or similar elements are identified with the same reference numerals throughout the several views.

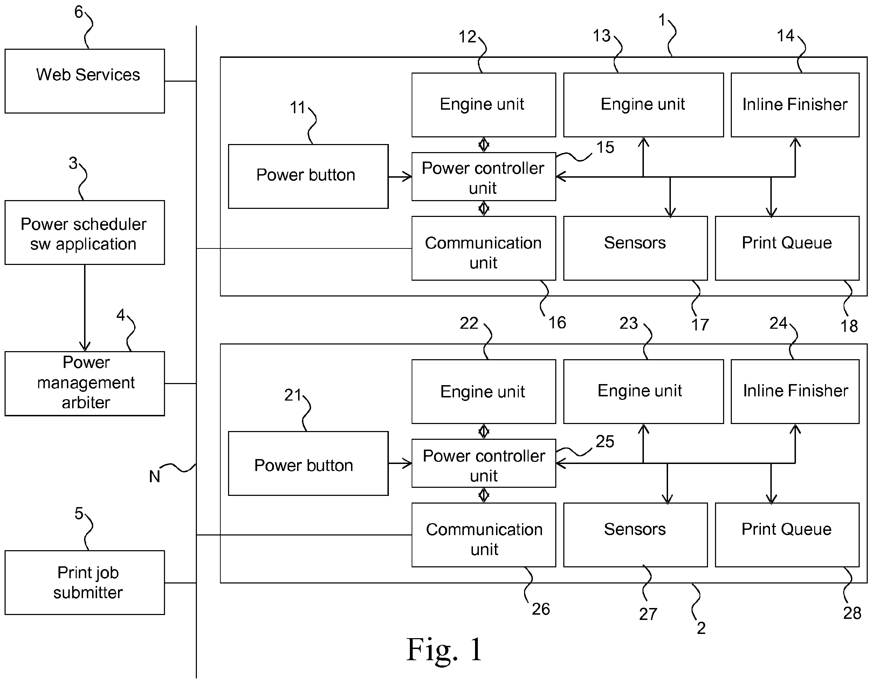

Figure 1 shows a general arrangement of a print fleet system together with a power management arbiter system 4 according to the invention. The print fleet system comprises a plurality of printers 1, 2 connected to a network N. Each printer comprises a plurality of functional modules. Hereinafter a functional module may also be called a functional unit or a unit.
The network N may be wired or at least partly wireless. The printers 1, 2 are connected to the network N via a low-power always-on communication unit 16, 26 respectively. The communication unit 16, 26 is configured to receive commands from other devices, e.g. print jobs, SNMP requests, etc. The communication unit 16, 26 is also configured to send requests. The printers 1, 2 also comprise a power button 11, 21, a first engine unit 12, 22, a second engine unit 13, 23, an inline finisher 14, 24, an always-on integrated power controller unit 15, 25, respectively.
Each printer 1, 2 comprises sensors 17, 27 respectively to sense physical parameters like temperature or humidity.
Each printer 1, 2 comprises a print queue 18, 28 respectively for queueing a print job received from the print job submitter 5.
Other functional modules of the printers 1, 2 generally have their own software controllable power circuits to turn on or off electric current to a functional module. Units may be internal in the engine units 12, 22, for example a fixation unit, a conditioning unit, etc., or may be bigger functional units attached to the printer 1, 2, e.g. in-line finishing modules. Also conditioned receiving material input units or conditioned receiving material output units may be envisioned.
When powering on a printer 1, 2, such a unit as mentioned here-above are typically switched on in a specific sequence of steps at a specific time by the integrated power controller 15, and a power-on progress of the unit is monitored by the integrated power controller 15.

In Fig. 1 the always-on communication unit 16, 26 of the printers 1, 2 respectively are connected to the integrated power controller unit 15, 25 respectively to allow remote control and remote monitoring, feedback, of the engine power-on sequence by the multi-machine power management arbiter component 4. Also the always-on communication units 16, 26 may communicate to the communication units in other printers in the print fleet system.

A print job submitter 5, the power management arbiter system 4, a power scheduler software application 3 and a web services system 6 are connected to the network N.

The power management arbiter component 4 determines which engine(s) and which separate units in each engine are allowed to power on, and when. The power management arbiter 4 has a bi-directional communication channel with the communication unit 16, 26 of each printer 1, 2 respectively. The bi-directional communication channel is used to receive power-on requests, grant engine units to power up, monitor power-on progress of engine units and revoke pending power-on grants. Optionally, the power management arbiter component 4 provides a (remote) software API for other software modules, like a power scheduler software application 3, to request a power-on of engines. Such a request may be invoked by a received print job, by a received operator power up action or by predetermined operating time periods of the environment of the print fleet system.

The power management arbiter component 4 is configured to arbitrate between power-on requests and to schedule power-on grants when multiple requests are pending.

A power-on request comprises a unique identifier of the printer 1, 2, e.g. a unique network address, and optionally a desired printer-ready time, e.g. a future point in time, "as soon as possible", or "immediately". Such a request is initiated by either an operator at the printer 1, 2 by activating the power-on button 11, 21 of the power controller unit 15, 25 respectively, or by the software application 3 generating a scheduled power-on request via a software API () of the power management arbiter component 4. Such a scheduled power-on request is sent to the power management arbiter component 4, and together with any other pending requests evaluated by the power management arbiter component 4.

As a result an order of power-on grants, and optionally moments and dependencies of power-on's,are established by the power management arbiter component 4.
As a result of the evaluation, pending, previously generated power-on grants may be revoked, before the new grants are sent. Any revoked grant is confirmed to the power management arbiter component 4 via the communication unit 16, 26 in order to prevent race conditions.
A grant specification typically comprises the identifier, e.g. network address, of the target engine, the identifier, e.g. network address, of a sender of the grant specification, and optional additional parameters. The optional additional parameters may be unit(s) to turn on - a special case is "all" to completely power-up the engine -, unit(s) power-up steps to execute, a moment to start turning on, expressed as a moment in time, e.g. "now", "moment in future", or expressed as a dependency, e.g. "when power-up step x of engine unit 12 of printer 1 is warmed up".
Once granted, the power management arbiter component 4 monitors a power on progress through the power control unit 15, 25 of the printers 1, 2 respectively.

For convenience reasons, Fig. 1 describes two printers 1, 2 in the print fleet system. However, other numbers of printers in the print fleet system may be envisioned with respect to the present invention.

Two options of implementation of a power-on sequence are described hereinafter.

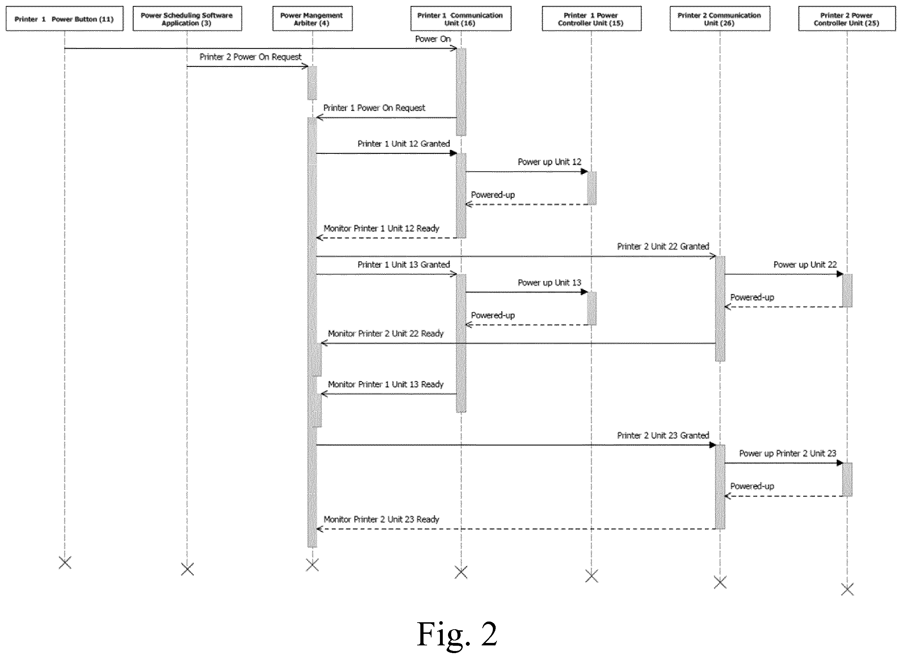

Fig. 2 shows a first implementation according to a central orchestration.
In the first implementation, issuing grants to multiple printers 1, 2 and their engine units 12, 13, 22, 23, monitoring the power-on progress and reacting to the power-on status is under exclusive control of the power management arbiter component 4.
The power management arbiter component 4 controls the power-on by (remotely) instructing the printer 1 to power-on one or more engine units 12, 13 and by subsequently monitoring (remotely) the current power-on state of the engine units 12, 13 of the printer 1. Once the selected units 12, 13 of the printer 1 are powered on, engine 1 is remotely instructed to power up other units as well engine 2 is remotely instructed to power-on certain units, e.g. engine units 22, 23. Next printer 2 is monitored and once powered-up, a next printer, if any, is remotely instructed to power-on.

Monitoring and remotely controlling the powering-on can be implemented through a dedicated API of the communication unit 16, 26.
Alternatively, when printers need to be turned on completely one after the other, a following well-known mechanism may be used: through a simple network management protocol (SNMP) the current status of the printer 1 may be polled, and once powered-on, a wake-up print job will be sent from the power management arbiter component 4 to the power controller unit 25 of the next printer 2.

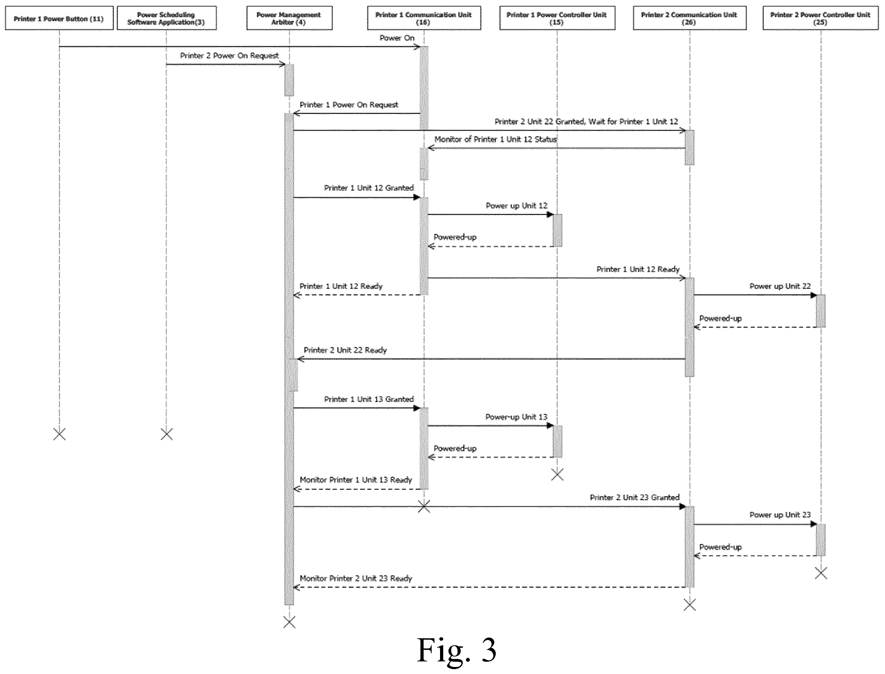

Fig. 3 shows a second implementation according to a partly delegated orchestration. According to the second implementation the power management arbiter component 4 grants multiple printers 1, 2 to power up, but the power management arbiter component 4 identifies the condition/dependency for one printer 1 to monitor directly the power up state of another printer 2. In the sequence diagram in Fig. 3, the power management arbiter component 4 grants the printer 1 and printer 2 to power up engine units 12, 22 respectively, but tells printer 2 to wait for the printer 1 to be ready with engine unit 12.

Printer 2 then autonomously monitors progress on printer 1. Once done, the printers 1, 2 report back to the power management arbiter component 4. The power management arbiter component 4 then grants printer 1 to power-on engine unit 13.

Hereinafter it is described how the power management arbiter component determines an optimal power-on moment of a printer of the print fleet system.

According to a first embodiment the power management arbiter system uses a moving average of the previous times it took to power up a given functional module of a printer in the print fleet system. In this way, a prediction of an actual and required power-on duration is printer-specific and also takes into account aging effects of the functional modules, e.g. of fixation heaters. In a more advanced form, the power management arbiter system takes into account one or more additional factors that influence the power up duration. An example of such a factor is the temperature difference between an ambient temperature and a desired temperature of a functional module of the printer when it is powered up. The power management arbiter system estimates the multidimensional mapping from relevant factors to power up duration. This mapping may be computed with well-known regression or machine learning algorithms like Logistic Regression, Support Vector Machines (SVM) or Neural Networks (NN).

When detailed information is available about the power consumption of the functional modules of the printers during the various phases during power-up, the process to start up the functional modules of the printers may further be improved by overlapping the consecutive power-up sequences. This is done by starting up the next printer at the earliest moment possible while still making sure a cumulative power consumption of the printers that are starting up in parallel is lower or equal to a peak power consumption of a single printer during power-up. This is possible if different phases of the power-up process have a lower power consumption than the peak.

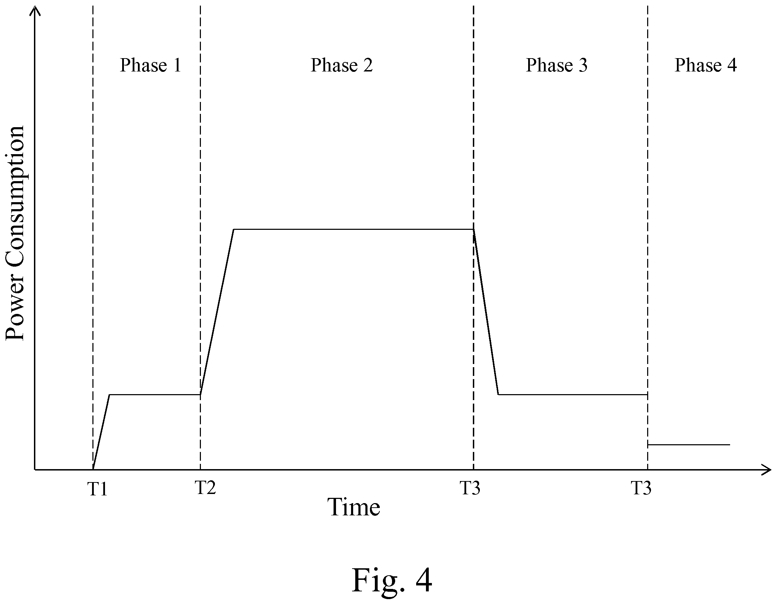

Fig. 4 shows a schematic overview of the power consumption over time when a printer engine is powered-up. T1 is a time that the power-up is started. A power-up process comprises three phases with different power consumption needs. At T4, the printer engine is completely powered up and ready to print. The printer engine then resides in an idle state (phase 4). Phase 2 between time T2 and T3 is the phase during which the power consumption is maximal for the printer engine. A printer of the print fleet system may comprise more than one print engine. Each print engine may have a power consumption like shown in Fig. 4. In Fig. 4 the power up phases of the printer engine is shown. However, power up phases of other functional modules in the printer may be envisioned.

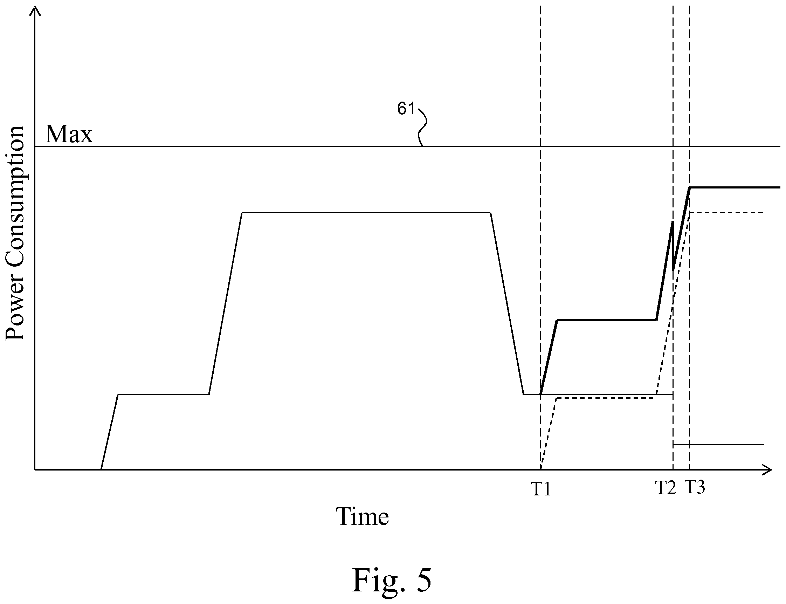

Fig. 5 shows a schematic overview of the power consumption over time during the power-up of two printer engines. The two printer engines may be part of one single printer, but one printer engine may also be part of another printer than the other printer engine. When a first printer engine 1 (normal line) has finished drawing peak power consumption at time T1, a second printer engine 2 (dashed line) may be started up at time T1. A maximum of a combined power consumption (bold line) of both printer engines is reached at time T3 and is minimal, i.e. an idle consumption of the first printer engine 1 plus a peak consumption of the second printer engine 2. By doing so, the power up of the two printer engines 1, 2 of the print fleet system overlaps in time for at least one phase per printer while a summarized power consumption during a time period starting from T3 is still below a maximum allowed power consumption 61. Fig. 5 shows power consumption of two printer engines. The two printer engines may be part of one printer but may also part of different printers. Also other functional modules than a print engine may be envisioned for display in a power consumption graph like the schematic overview in Fig. 5.

Other factors that can be taken into account during power-up of the print fleet system are:
- An current temperature of the print engine (or fixation heaters). The current temperature may either be available directly, as the current temperature of the print engine, or indirectly as the time since the printer was last shut down.
- Whether or not other functional modules, e.g. in-line finishing equipment, conditioned receiving material input holders, receiving material output holders, near-line finishing equipment, off-line finishing equipment should also be powered-up.
- A printer planning for the production day: only those printers that are currently needed during the production day, will be automatically powered-on.
- A job planning for the production day: the printer is warmed up to the point it can process the first job. The right operating temperature of the fixation drum may vary, depending on the media used in the first job. This means for example that a printer needs to be powered up earlier when the first job uses heavy media.
- An availability of multiple power line connections and the distribution of engines to these connections: it allows optimization per connection.
- An availability of time-dependent energy tariffs (e.g. night/day time): for example the power-up of the print fleet system is started with the printers having the cheapest total energy price. This could influence the order in which the printers are powered on (for example, resulting in a power up of most demanding printers in the low tariff period), but also optimize the trade-off between gain due to better tariff and the power consumption in idle time when the printer is started up earlier than strictly necessary.
- Printer capabilities in relation to the production planning to determine the priority of the power-up sequence.

The additional information that is used for the predictions may come from different sources: from the printer itself, from the production planning, from web services, from the internet (e.g. current weather conditions, information from the energy supplier, etc.), and/or from the manufacturer of the printer.

In one embodiment, an optimization goal of the power up of the print fleet system is to determine a just-in-time start-up sequence to power up the involved printers in such a way that the involved printers are all operational at a predefined time of the day (typically the start of the working day, or start of the first shift). This is done while the total start-up time is minimal. In this case, the power management arbiter component first determines the start-up sequence and its total length. Combined with the user-defined 'all printers ready time', the total length determines the moment the first printer in the sequence needs to be powered on. From that moment on all other printers are powered on in the sequence that has been determined.

From the individual predictions per printer or per functional module of the printer, a total required power-on time may be computed, and based on the total required power-on time, the start-up time of the first printer and the start-up order of the consecutive printers are determined in such a way that all printers are operational at the desired start of the production day or, given the production planning, the time of day they are assumed to start production.

In another embodiment, an optimization goal is to guarantee a fastest start up sequence given a fixed start time. This is useful in the case there are specific requirements regarding the use of electric power. For instance, a printer company located in an urban area may only be allowed to use heavy load electric power after 6:00 AM. In this case, the power management arbiter component determines a start-up sequence and starts right away with the powering the first printer in a sequence at the user-defined start time. In this way, the printers are powered-up in a minimal time-span and a production time on the printers is maximized.

Note that the determination may take place in the power management arbiter component that orchestrates the power-up sequence of the printers, but it may also be part of a printer (e.g. of the power controller unit) of the print fleet system. In the first case, the power management arbiter component collects all the historic data and makes predictions for all printers involved, while in the latter case, the printer makes a prediction of its own power-up time based on its own data. All the predictions from the respective printers in the print fleet system are then gathered by the power management arbiter component, which computes the start-up sequence and triggers the respective printers.

In yet another variant, the orchestration is not done on a printer level, but on a printer subsystem level instead. This orchestration is possible if the start-up process of a printer has different phases that may be controlled independently. This approach doesn't directly change the nature of the programming of the power management arbiter system, but the predictions need to be made on subsystem level and therefore the data needed is also about the start-up times of the subsystems. The advantage of subsystem level orchestration is that it gives more flexibility in the exact timings of the power-up sequence. Depending on the power usage during power-up, this can lead to a more efficient power-up process.

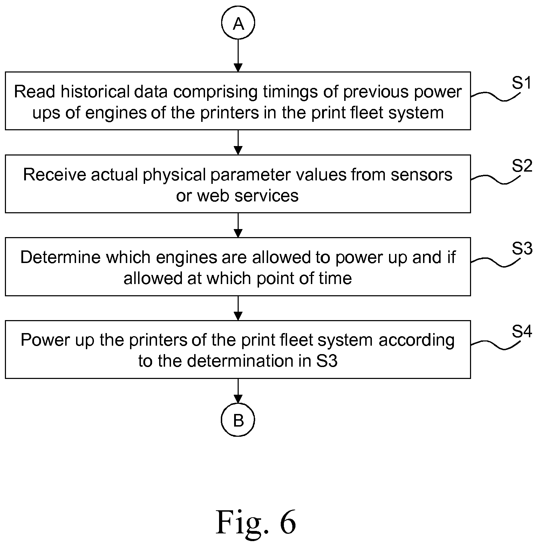

Fig. 6 shows a flow diagram of an embodiment of the method according to the invention. The method start in start point A and leads to a first step S1.

In the first step S1 historical data comprising timings of previous power ups of the engines of the printers in the print fleet system is read from storage of the power management arbiter system or from storages of the printers in the print fleet system or provided by web services. For example current used during a power up of a printer engine as shown in Fig. 5 or current used during a power up of two printer engines as shown in Fig. 6 may be part of the historical data. Also environmental physical parameter values during previous power ups may be part of the historical data.

In a second step S2 actual physical parameter values sensed by the sensors at the present moment or gathered via web services are received by the power management arbiter system.
In a third step S3 the power management arbiter system determines which printers are allowed to power up, and, if allowed, at which point in time. A power-up sequence is determined according to the invention. The read timings comprised in the read historical data are taken into account. The power management arbiter system acts as according to the orchestrations shown in Fig. 2 - 4.
In a fourth step S4 the printers of the print fleet system are powered up according to the determination in the third step S3.
The method ends in an end point B.

## Claims

1. A power management arbiter system (4) for managing a print fleet system, the print fleet system comprising a plurality of printers (1,2),
**characterised in that**
the power management arbiter system (4) is configured to manage the power up of the print fleet system,
each printer of the plurality of printers comprising a plurality of functional modules like a print engine (12,13,22,23) and a heater, a power controller (15,25), a communication interface (16, 26) with the power management arbiter system (4),
the power management arbiter system (4) being configured to determine which functional modules are allowed to power up, and, if allowed, at which point in time, wherein
the determination of which functional modules are allowed to power up, and, if allowed, at which point in time, takes into account historical data and actual physical data stored in the printers of the print fleet system or stored in storage of the power management arbiter system (4) or provided by a web service system, the historical data comprising timings of an electric current used during previous power ups of the functional modules of printers in the print fleet system and physical data measured during previous power ups of the functional modules of printers in the print fleet system.

2. The power management arbiter system (4) according to claim 1, wherein
the determination of which functional modules are allowed to power up, and, if allowed, at which point in time, takes into account printer-specific variances of the functional modules in the printers in the print fleet system.

3. The power management arbiter system (4) according to claim 1 or 2, wherein the determination of which functional modules are allowed to power up, and, if allowed, at which point in time, takes into account an actual physical parameter like temperature or humidity inside the functional modules of the printers of the print fleet system.

4. The power management arbiter system (4) according to claim 3, wherein at least one printer of the plurality of printers comprises a heater, and the determination of which functional modules are allowed to power up, and, if allowed, at which point in time, takes into account a temperature of the heater.

5. The power management arbiter system (4) according to claim 1, wherein each printer of the plurality of printers comprises a print job queue (18, 28) for print jobs submitted to the printer for printing, each print job having print job specifications, the print job queue being readable by the print controller (15,25) which is configured to determine power up conditions for each print job based on the print job specifications and to transfer the power up conditions of each print job to the power management arbiter system (4).

6. The power management arbiter system (4) according to claim 1, wherein
the determination of which functional modules are allowed to power up, and, if allowed, at which point in time, takes into account actual physical parameters of an environment of the print fleet system.

7. The power management arbiter system (4) according to claim 6, wherein the printers in the print fleet system comprise sensors (17, 27), via which sensors values of the actual physical parameters are gathered.

8. The power management arbiter system (4) according to claim 6, wherein the power management arbiter system (4) is connected to a digital network, via which digital values of the actual physical parameters and information from other printers of the print fleet system are gathered.

9. Method of managing a power up of a print fleet system comprising a plurality of printers and connected to a power management arbiter system (4),
the method **characterised by** the steps of:
a) reading (S1) from storage of the power management arbiter system (4) or from storages of the printers of the print fleet system or provided by a web service system, historical data comprising timings of current used during previous power ups of functional modules of the printers (1, 2) of the print fleet system and physical data measured during previous power ups of the functional modules of printers (1, 2) in the print fleet system, and actual physical data (S2) of the print fleet system and an environment of the print fleet system,
b) the power management arbiter system (4) determining (S3) which functional modules are allowed to power up, and, if allowed, at which point in time,
c) powering up (S4) the functional modules of the printers (1, 2) of the print fleet according to the determination in the determining step b),
wherein the determining step b) takes into account the historical data and the actual physical data read in step a).

10. The method according to claim 9, wherein a power up of a functional module of a printer (1, 2) of the print fleet system comprises phases of different power consumption, and the method comprises the step of overlapping a power up of two functional modules of printers (1, 2) of the print fleet system in time for at least one phase per functional module when a summarized power consumption over the printers (1, 2) of the print fleet during said at least one phase is below a maximum allowed power consumption (61).

11. The method according to claim 9 or 10, wherein the method comprises the steps of monitoring a progress of the power up of a functional module of one printer (1, 2) in the print fleet system by another printer (1, 2) in the print fleet system, and powering up the other printer (1, 2) if the start of the powering up of the other printer (1, 2) is allowed according to the progress of the power up of the functional module of the one printer (1, 2).

12. The method according to any of the claims 9 - 11, wherein the method comprises the step of determining a time of start of the power up of the print fleet system taking into account a predetermined ready time of each printer (1, 2) in the print fleet system.

13. The method according to any of the claims 9 - 12, wherein the method comprises the step of optimizing an earliest ready time of each printer (1, 2) in the print fleet system taking into account a predetermined time of start of the power up of the print fleet system.

14. A non-transitory recording medium comprising computer executable program code which, when executed by a computer, causes the computer to perform the method according to any of the claims 9 - 13.

## Patentansprüche

1. Leistungsmanagementsystem (4) zum Managen eines Druckerflottensystems, wobei das Druckerflottensystem eine Vielzahl von Druckern (1, 2) aufweist,
**dadurch gekennzeichnet, dass**
das Leistungsmanagementsystem (4) dazu konfiguriert ist, das Hochfahren des Druckerflottensystems zu managen,
wobei jeder Drucker aus der Vielzahl der Drucker eine Vielzahl von Funktionsmodulen wie etwa ein Druckgerät (12, 13, 22, 23) und eine Heizung, ein Leistungssteuergerät (15, 25), und eine Kommunikationsschnittstelle (26) mit dem Leistungsmanagementsystem (4) aufweist,
und das Leistungsmanagementsystem (4) dazu konfiguriert ist, zu entscheiden, welche Funktionsmodule hochfahren dürfen und, wenn sie hochfahren dürfen, zu welchem Zeitpunkt, wobei
die Entscheidung, welche Funktionsmodule hochfahren dürfen und, wenn sie hochfahren dürfen, zu welchem Zeitpunkt, historische Daten und aktuelle physikalische Daten berücksichtigt, die in den Druckern des Druckerflottensystems gespeichert sind oder in einem Speicher des Leistungsmanagementsystems (4) gespeichert sind oder von einem Netzservicesystem bereitgestellt werden, wobei die historischen Daten Zeiten eines elektrischen Stromes umfassen, der während vorheriger Hochfahrphasen der Funktionsmodule von Druckern in dem Druckerflottensystem benutzt wurde, sowie physikalische Daten, die während vorheriger Hochfahrphasen der Funktionsmodule der Drucker in dem Druckerflottensystem gemessen wurden.

2. Leistungsmanagementsystem (4) nach Anspruch 1, bei dem die Entscheidung, welche Funktionsmodule hochfahren dürfen und, wenn sie hochfahren dürfen, zu welchem Zeitpunkt, druckerspezifische Abweichungen der Funktionsmodule in den Druckern des Druckerflottensystems berücksichtigt.

3. Leistungsmanagementsystem (4) nach Anspruch 1 oder 2, bei dem die Entscheidung, welche der Funktionsmodule hochfahren dürfen und, wenn sie hochfahren dürfen, zu welchem Zeitpunkt, einen aktuellen physikalischen Parameter wie Temperatur oder Feuchtigkeit im Inneren der Funktionsmodule der Drucker des Druckerflottensystems berücksichtigt.

4. Leistungsmanagementsystem (4) nach Anspruch 3, bei dem wenigstens ein Drucker aus der Vielzahl der Drucker eine Heizung aufweist und die Entscheidung, welche Funktionsmodule hochfahren dürfen und, wenn sie hochfahren dürfen, zu welchem Zeitpunkt, eine Temperatur der Heizung berücksichtigt.

5. Leistungsmanagementsystem (4) nach Anspruch 1, bei dem jeder Drucker aus der Vielzahl der Drucker eine Druckauftragsschlange (18, 28) für den Drucker zum Drucken erteilter Druckaufträge aufweist, wobei jeder Druckauftrag Druckauftragsspezifikationen hat, die Druckauftragsschlange von der Druckersteuerung (15, 25) lesbar ist, die dazu konfiguriert ist, Hochfahrbedingungen für jeden Druckauftrag auf der Basis der Druckauftragspezifikationen zu bestimmen und die Hochfahrbedingungen für jeden Druckauftrag an das Leistungsmanagementsystem (4) zu übermitteln.

6. Leistungsmanagementsystem (4) nach Anspruch 1, bei dem die Entscheidung, welche Funktionsmodule hochfahren dürfen und, wenn sie hochfahren dürfen, zu welchem Zeitpunkt, aktuelle physikalische Parameter einer Umgebung des Druckerflottensystems berücksichtigt.

7. Leistungsmanagementsystem (4) nach Anspruch 6, bei dem die Drucker in dem Druckerflottensystem Sensoren (17, 27) aufweisen, mit welchen Sensoren die aktuellen physikalischen Parameter erfasst werden.

8. Leistungsmanagementsystem (4) nach Anspruch 6, bei dem das Leistungsmanagementsystem (4) an ein digitales Netzwerk angeschlossen ist, über welches digitale Werte der aktuellen physikalischen Parameter und Information von anderen Druckern aus dem Druckerflottensystem erfasst werden.

9. Verfahren zum Managen des Hochfahrens eines Druckerflottensystems mit einer Vielzahl von Druckern, die an ein Leistungsmanagementsystem (4) angeschlossen sind, welches Verfahren **gekennzeichnet ist durch** die folgenden Schritte:
a) lesen (S1), aus einem Speicher des Leistungsmanagementsystem (4) oder aus Speichern der Drucker des Druckerflottensystems oder aus einem Netzservicesystem, von historischen Daten, die Zeiten von Strömen umfassen, die während vorheriger Hochfahrphasen von Funktionsmodulen der Drucker (1, 2) des Druckerflottensystems benutzt wurden, und von physikalischen Daten, die während vorheriger Hochfahrphasen der Funktionsmodule von Druckern (1, 2) in dem Druckerflottensystem gemessen wurden, und von aktuellen physikalischen Daten (S2), des Druckerflottensystems und einer Umgebung des Druckerflottensystems,
b) wobei das Leistungsmanagementsystem (4) entscheidet (S3), welche Funktionsmodule hochfahren dürfen und, wenn sie hochfahren dürfen, zu welchem Zeitpunkt,
c) hochfahren (S4), der Funktionsmodule der Drucker (1, 2) der Druckerflotte gemäß der Entscheidung in Schritt b),
wobei der Entscheidungsschritt b) die in Schritt a) gelesenen historischen Daten und aktuellen physikalischen Daten berücksichtigt.

10. Verfahren nach Anspruch 9, bei dem ein Hochfahren eines Funktionsmoduls eines Druckers (1, 2) in dem Druckerflottensystem Phasen mit unterschiedlichem Leistungsverbrauch umfasst und das Verfahren den Schritt der zeitlichen Überlagerung des Hochfahrens von zwei Funktionsmodulen von Druckern (1, 2) aus dem Druckerflottensystem für wenigstens eine Phase je Funktionsmodul einschließt, wenn der über die Drucker (1, 2) des Druckerflottensystems während dieser wenigstens einen Phase summierte Leistungsverbrauch unter einem maximal zugelassenen Leistungsverbrauch (61) liegt.

11. Verfahren nach Anspruch 9 oder 10, bei dem das Verfahren die Schritte der Überwachung eines Fortschritts des Hochfahrens eines Funktionsmoduls eines Druckers (1, 2) in dem Druckerflottensystem durch einen anderen Drucker (1, 2) in dem Druckerflottensystem und des Hochfahrens des anderen Druckers (1, 2) einschließt, wenn der Beginn des Hochfahrens des anderen Druckers (1, 2) gemäß dem Fortschritt des Hochfahrens des Funktionsmoduls des einen Druckers (1, 2) zugelassen ist.

12. Verfahren nach einem der Ansprüche 9 bis 11, welches Verfahren den Schritt der Bestimmung einer Startzeit des Hochfahrens des Druckerflottensystems unter Berücksichtigung einer vorbestimmten Bereitschaftszeit jedes Druckers (1, 2) in dem Druckerflottensystem einschließt.

13. Verfahren nach einem der Ansprüche 9 bis 12, welches Verfahren den Schritt der Optimierung einer frühesten Bereitschaftszeit jedes Druckers (1, 2) in dem Druckerflottensystem einschließt, unter Berücksichtigung einer vorbestimmten Startzeit für das Hochfahren des Druckerflottensystems.

14. Nichtflüchtiges Speichermedium mit von einem Computer ausführbaren Programmcode, der, wenn er von einem Computer ausgeführt wird, den Computer veranlasst, das Verfahren nach einem der Ansprüche 9 bis 13 auszuführen.

## Revendications

1. Système d'arbitre de gestion d'énergie (4) permettant de gérer un système de parc d'impression, le système de parc d'impression comprenant une pluralité d'imprimantes (1, 2),
**caractérisé en ce que**
le système d'arbitre de gestion d'énergie (4) est configuré pour gérer la mise sous tension du système de parc d'impression,
chaque imprimante de la pluralité d'imprimantes comprenant une pluralité de modules fonctionnels, comme un moteur d'impression (12, 13, 22, 23) et un élément de chauffage, un organe de commande d'énergie (15, 25), une interface de communication (16, 26) avec le système d'arbitre de gestion d'énergie (4),
le système d'arbitre de gestion d'énergie (4) étant configuré pour déterminer quels modules fonctionnels sont autorisés à être mis sous tension et, en cas d'autorisation, à quel moment, dans lequel
la détermination de quels modules fonctionnels sont autorisés à être mis sous tension, et, en cas d'autorisation, à quel moment, tient compte de données historiques et de données physiques réelles mémorisées dans les imprimantes du système de parc d'impression ou mémorisées dans une mémoire du système d'arbitre de gestion d'énergie (4) ou fournies par un système de service Web, les données historiques comprenant des timings d'un courant électrique utilisé au cours de mises sous tension précédentes des modules fonctionnels d'imprimantes dans le système de parc impression et des données physiques mesurées au cours de mises sous tension précédentes des modules fonctionnels d'imprimantes dans le système de parc d'impression.

2. Système d'arbitre de gestion d'énergie (4) selon la revendication 1, dans lequel la détermination de quels modules fonctionnels sont autorisés à être mis sous tension, et, en cas d'autorisation, à quel moment, tient compte de variances spécifiques à une imprimante des modules fonctionnels dans les imprimantes dans le système de parc d'impression.

3. Système d'arbitre de gestion d'énergie (4) selon la revendication 1 ou 2, dans lequel la détermination de quels modules fonctionnels sont autorisés à être mis sous tension, et, en cas d'autorisation, à quel moment, tient compte d'un paramètre physique réel comme une température ou une humidité à l'intérieur des modules fonctionnels des imprimantes du système de parc d'impression.

4. Système d'arbitre de gestion d'énergie (4) selon la revendication 3, dans lequel au moins une imprimante de la pluralité d'imprimantes comprend un élément de chauffage, et la détermination de quels modules fonctionnels sont autorisés à être mis sous tension, et, en cas d'autorisation, à quel moment, tient compte d'une température de l'élément de chauffage.

5. Système d'arbitre de gestion d'énergie (4) selon la revendication 1, dans lequel chaque imprimante de la pluralité d'imprimantes comprend une file d'attente de travaux d'impression (18, 28) pour des travaux d'impression soumis à l'imprimante à imprimer, chaque travail d'impression ayant des spécifications de travail d'impression, la file d'attente de travaux d'impression étant lisible par l'organe de commande d'impression (15, 25) qui est configuré pour déterminer des conditions de mise sous tension pour chaque travail d'impression sur la base des spécifications de travail d'impression et pour transférer les conditions de mise sous tension de chaque travail d'impression au système d'arbitre de gestion d'énergie (4).

6. Système d'arbitre de gestion d'énergie (4) selon la revendication 1, dans lequel la détermination de quels modules fonctionnels sont autorisés à être mis sous tension, et, en cas d'autorisation, à quel moment, tient compte de paramètres physiques réels d'un environnement du système de parc d'impression.

7. Système d'arbitre de gestion d'énergie (4) selon la revendication 6, dans lequel les imprimantes dans le système de parc d'impression comprennent des capteurs (17, 27), par l'intermédiaire desquels des valeurs de capteur des paramètres physiques réels sont recueillies.

8. Système d'arbitre de gestion d'énergie (4) selon la revendication 6, dans lequel le système d'arbitre de gestion d'énergie (4) est relié à un réseau numérique, par l'intermédiaire duquel des valeurs numériques des paramètres physiques réels et des informations d'autres imprimantes du système de parc d'impression sont recueillies.

9. Procédé de gestion d'une mise sous tension d'un système de parc d'impression comprenant une pluralité d'imprimantes et relié à un système d'arbitre de gestion d'énergie (4),
le procédé étant **caractérisé par** les étapes de :
a) la lecture (S1), depuis une mémoire du système d'arbitre de gestion d'énergie (4) ou depuis des mémoires des imprimantes du système de parc d'impression ou fournies par un système de service Web, de données historiques comprenant des timings d'un courant utilisé au cours de mises sous tension précédentes de modules fonctionnels des imprimantes (1, 2) du système de parc d'impression et de données physiques mesurées au cours de mises sous tension précédentes des modules fonctionnels d'imprimantes (1, 2) dans le système de parc d'impression, et de données physiques réelles (S2) du système de parc d'impression et d'un environnement du système de parc d'impression,
b) par le système d'arbitre de gestion d'énergie (4), la détermination (S3) de quels modules fonctionnels sont autorisés à être mis sous tension, et, en cas d'autorisation, à quel moment,
c) la mise sous tension (S4) des modules fonctionnels des imprimantes (1, 2) du parc d'impression en fonction de la détermination à l'étape b) de détermination,
dans lequel l'étape b) de détermination tient compte des données historiques et des données physiques réelles lues à l'étape a).

10. Procédé selon la revendication 9, dans lequel une mise sous tension d'un module fonctionnel d'une imprimante (1, 2) du système de parc d'impression comprend des phases de consommations d'énergie différentes, et le procédé comprend l'étape du chevauchement d'une mise sous tension de deux modules fonctionnels d'imprimantes (1, 2) du système de parc d'impression dans le temps pour au moins une phase par module fonctionnel lorsqu'une consommation d'énergie synthétisée sur les imprimantes (1, 2) du parc d'impression au cours de ladite au moins une phase est inférieure à une consommation d'énergie admissible maximale (61).

11. Procédé selon la revendication 9 ou 10, dans lequel le procédé comprend les étapes de la surveillance d'un déroulement de la mise sous tension d'un module fonctionnel d'une imprimante (1, 2) dans le système de parc d'impression par une autre imprimante (1, 2) dans le système de parc d'impression, et la mise sous tension de l'autre imprimante (1, 2) si le démarrage de la mise sous tension de l'autre imprimante (1, 2) est autorisé en fonction du déroulement de la mise sous tension du module fonctionnel de l'imprimante (1, 2).

12. Procédé selon l'une quelconque des revendications 9 à 11, dans lequel le procédé comprend l'étape de la détermination d'un temps de démarrage de la mise sous tension du système de parc d'impression en tenant compte d'un temps prédéterminé auquel chaque imprimante (1, 2) dans le système de parc d'impression est prête.

13. Procédé selon l'une quelconque des revendications 9 à 12, dans lequel le procédé comprend l'étape de l'optimisation d'un temps le plus tôt auquel chaque imprimante (1, 2) dans le système de parc d'impression est prête en tenant compte d'un temps prédéterminé de démarrage de la mise sous tension du système de parc d'impression.

14. Support d'enregistrement non transitoire comprenant un code de programme exécutable par ordinateur qui, lorsqu'il est exécuté par un ordinateur, amène l'ordinateur à effectuer le procédé selon l'une quelconque des revendications 9 à 13.
